# EUROPÄISCHE PATENTANMELDUNG

(11) **EP 0 965 944 A2**
(43) Veröffentlichungstag der Anmeldung: **22.12.1999**
(21) Anmeldenummer: 99890184.7
(22) Anmeldetag: 08.06.1999
(51) Int. Cl.: G06K 13/06

(54) **Vorrichtung zur Auswertung von auf elektronischen Datenträgern, insbesondere Wertkarten gespeicherten Daten**

(30) Priorität: 19.06.1998 AT 106698
(71) Anmelder: Systems AG, 6900 Bregenz (AT)
(72) Erfinder: Umundum, Dietmar, 6900 Bregenz (AT); Loy, Oliver, 6900 Bregenz (AT)
(74) Vertreter: Atzwanger, Richard Dipl.Ing.

(57) **Zusammenfassung**

Einrichtung zur Auswertung von auf elektronischen Datenträgern, insbesondere Wertkarten (10), gespeicherten Daten mit einem Gehäuse (1), in welches die Datenträger (10) einbringbar sind und welches mit Lese(31) und Auswert- bzw. Anzeigegeräten ausgebildet ist. Dabei ist das Gehäuse (1) mit einer Öffnung ausgebildet, welche Öffnung durch eine bewegliche Abdeckung verschließbar ist, und befinden sich in dessen Innenraum elektronische Auswertegeräte (31) sowie eine verdrehbare Wippe (22), wobei nach der Auswertung des jeweiligen elektronischen Datenträgers (10) die Wippe (22) verschwenkt wird, wodurch dieser Datenträger (10) an einen Sammelbehälter (25, 26) od. dgl. abgebbar ist (Fig. 4).

## Beschreibung

Die gegenständliche Erfindung betrifft eine Einrichtung zur Auswertung von auf elektronischen Datenträgern, insbesondere Wertkarten, gespeicherten Daten mit einem Gehäuse, in welches die Datenträger einbringbar sind und welches mit Lese- und Auswert- bzw. Anzeigegeräten ausgebildet ist.

Es ist bekannt, für den Zutritt zu Anlagen und die Benützung von in diesen befindlichen Einrichtungen elektronische Datenträger auszugeben, auf welchen die Zeitpunkte des Betretens der Anlagen, die Benützung der Einrichtungen und die Inanspruchnahme von Dienstleistungen, welche in diesen Anlagen geboten werden, aufgezeichnet werden. Hierdurch kann eine automatisierte Berechnung desjenigen Betrages erfolgen, welcher beim Verlassen der Anlagen für deren Benützung geleistet werden muß. Diese Datenträger können auch als Wertkarten ausgebildet sein.

Derartige Anlagen können Skizentren mit Liftanlagen, Freizeitanlagen mit einer Mehrzahl von unterschiedlichen Einrichtungen, Sportanlagen, Badeanlagen, Parkgaragen, Restaurants u.dgl. sein. Beim Benützen der einzelnen Bereiche dieser Anlagen können die Zeitpunkte des Betretens bzw. des Verlassens derselben, weiters die Arten der unterschiedlichen Einrichtungen sowie die in Anspruch genommenen Dienstleistungen u.dgl. auf den Datenträgern gespeichert werden bzw. können die hierfür zu leistenden Beträgen von den Datenträgern abgebucht werden. Beim Verlassen der Anlagen erfolgt dann eine Abrechnung, wobei entweder der erforderliche Betrag gezahlt werden muß oder eine Rückzahlung des nicht verbrauchten Betrages erfolgt.

Es ist weiters bekannt, am Ausgang von derartigen Anlagen, z.B. in Parkgaragen, einen Kassier vorzusehen, durch welchen die Auswertung der Datenträger vorgenommen und die finanzielle Abwicklung durchgeführt wird.
Bei der automatisierten Auswertung von Datenträgern besteht das Erfordernis, diese so in das dafür vorgesehene Gerät einzubringen, daß eine solche Lage derselben gegenüber den Leseeinrichtungen gewährleistet ist, um eine elektronische Ablesung und eine nachfolgende Berechnung zu ermöglichen. Zudem müssen hierauf diese Datenträger eingezogen werden. Bei einem derartigen Gerät besteht deshalb das weitere Erfordernis, daß die Lesegeräte relativ nahe bei den Datenträgern angeordnet sind, um eine ordnungsgemäße Ablesung zu gewährleisten. Zudem müssen in einem derartigen Gerät Einrichtungen zum Bewegen der Datenträger vorgesehen sein, um diese aus dem Lesebereich zu entfernen, wodurch das Gerät für weitere Lesevorgänge zur Verfügung steht, wobei die Datenträger z.B. in einen Sammelbehälter abgefördert werden.
Bei den bisher bekannten Geräten bestehen dabei die Schwierigkeiten, daß einerseits beim Ablesen der Datenträger Fehlfunktionen auftreten können, wodurch keine ordnungsgemäße Auswertung derselben erfolgt, und daß andererseits beim Transport der Datenträger Fehlfunktionen auftreten können, wodurch die gesamten Geräte funktionsunfähig werden.

Der gegenständlichen Erfindung liegt demnach die Aufgabe zugrunde, eine Einrichtung zum Ablesen und Auswerten von Datenträgern zu schaffen, durch deren Ausbildung Fehlfunktionen bei der elektronische Ablesung derselben und bei deren Förderung in einen Sammelbehälter mit Sicherheit ausgeschlossen werden. Diese Aufgaben werden erfindungsgemäß dadurch gelöst, daß das Gehäuse mit einer Öffnung ausgebildet ist, welche Öffnung durch eine bewegliche Abdeckung verschließbar ist, und in dessen Innenraum elektronische Auswertegeräte sowie eine verdrehbare Wippe vorgesehen sind, wobei nach der Auswertung des jeweiligen elektronischen Datenträgers die Wippe verschwenkt wird, wodurch der Datenträger an einen Sammelbehälter od.dgl. abgebbar ist.

Vorzugsweise ist die bewegliche Abdeckung durch einen an der Vorderseite des Gehäuses angeordneten Drehschieber gebildet, welcher angenähert halbkreisförmig ausgebildet ist und welcher in seine Schließstellung verdrehbar ist. Insbesondere kann dessen Verdrehung entgegen der Wirkung einer Rückstellfeder erfolgen, wobei er mittels eines elektromagnetisch betätigbaren Riegels in seiner Schließstellung verrastbar sein kann.
Nach einer weiteren bevorzugten Ausführungsform ist der Innenraum des Gerätes an seiner Oberseite durch eine halbzylindrische Wand abgeschlossen, in welcher sich die elektronischen Auswertgeräte befinden. Weiters kann die Wippe um eine Achse verschwenkbar sein, welche sich koaxial zur halbzylindrischen Wand befindet und welche vorzugsweise auch die Drehachse der verschwenkbaren Abdeckung bildet.

Nach weiteren bevorzugten Merkmalen ist ein Elektromotor vorgesehen, welcher zur Verstellung der Wippe dient, wobei die Wippe sowohl im Uhrzeigersinn als auch entgegen dem Uhrzeigersinn verschwenkbar ist. Zudem können im unteren Bereich des Gehäuses zwei entfernbare Behälter zur Aufnahme der Datenträger vorgesehen sein. Weiters ist vorzugsweise die verschwenkbare Wippe in ihrer waagrechten Stellung mittels eines weiteren elektromagnetisch betätigbaren Riegels feststellbar.

Der Gegenstand der Erfindung ist nachstehend anhand eines in der Zeichnung dargestellten Ausführungsbeispieles näher erläutert.
Es zeigen:
- Fig. 1: eine erfindungsgemäße Vorrichtung, in Vorderansicht,
- Fig. 2: diese Vorrichtung bei entfernter Frontplatte, in Vorderansicht,
- Fig. 3: diese Vorrichtung, im Schnitt nach der Linie A-A der Fig. 1,
- Fig. 4: diese Vorrichtung im Schnitt nach der Linie B-B der Fig. 3.

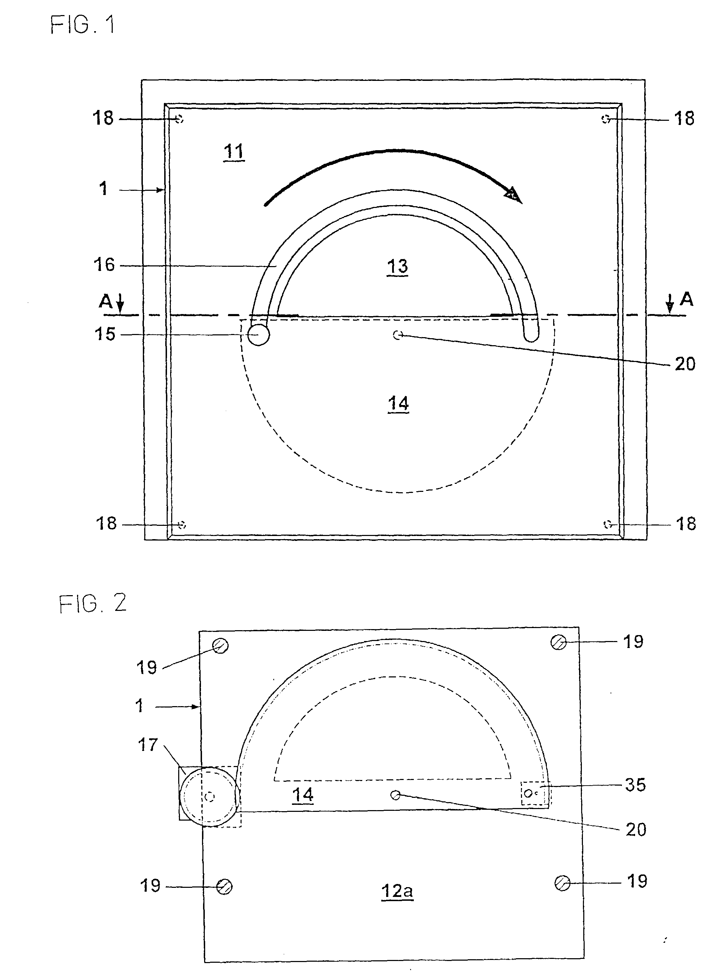

Wie dies aus den Fig. 1, Fig. 2 und Fig. 3 ersichtlich ist, weist eine derartige Vorrichtung ein angenähert quaderförmiges Gehäuse 1 auf, welches durch eine Vorderwand 12 und durch eine Rückwand 12a gebildet ist, welche sich voneinander im Abstand befinden und welche durch an den Ecken vorgesehenen Bolzen 19 miteinander verbunden und voneinander distanziert sind. An der Vorderwand 12 ist weiters mittels Bolzen 18 eine Frontplatte 11 befestigt.

Hinter der Frontplatte 11, welche mit einer halbkreisförmigen Ausnehmung 13 ausgebildet ist, befindet sich eine um eine horizontale Achse 20 verdrehbare Abdeckung 14. An der verdrehbaren Abdeckung 14 ist ein Handgriff 15 befestigt, welchem in der Frontplatte 11 ein halbkreisförmiger Schlitz 16 zugeordnet ist. Durch Führung des Handgriffes 15 innerhalb des Schlitzes 16 kann die verdrehbare Abdeckung 14 aus ihrer in
Fig. 1 dargestellten Stellung, in welcher der Innenraum des Gehäuses 1 durch die Öffnung 13 hindurch zugänglich ist, entgegen der Wirkung einer Rückstellfeder 17 um etwa 180° in ihre in Fig. 2 dargestellte Schließstellung verschwenkt werden.

Solange der Innenraum des Gehäuses 1 zugänglich ist, kann in diesen ein Datenträger 10 zur Auswertung und Abrechnung eingelegt werden. Hierauf wird die Abdeckung 14 in ihre Schließstellung verdreht, in welcher sie mittels eines Riegels 36, welcher von einem Elektromagneten 35 verstellt wird, gehalten ist.

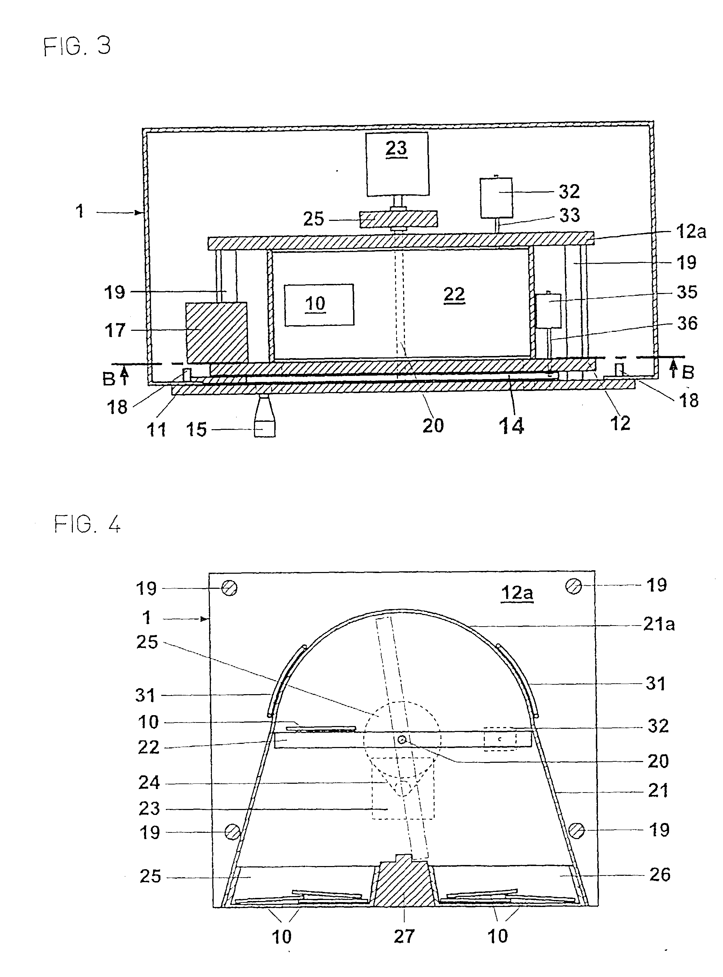

Wie dies aus Fig. 4 ersichtlich ist, befindet sich zwischen den beiden Wänden 12 und 12a eine angenähert haubenförmig ausgebildete Wand 21, welche in ihrem oberhalb der Achse 20 befindlichen Bereich 21a angenähert halbzylindrisch ausgebildet ist. Dieser Bereich 21a der Wand dient als Träger für eine Mehrzahl von elektronischen Sensoren 31, durch welche die in das Gehäuse 1 eingebrachten Datenträger 10 ausgewertet werden. Innerhalb der haubenförmigen Wand 21 befindet sich eine um die Achse 20 verdrehbare Wippe 22. Zur Verdrehung der Wippe 22 dient ein Elektromotor 23, welcher über einen Riemen 24 mit einem auf der Welle 20 der Wippe 22 sitzenden Antriebsrad 25 zusammenwirkt. Im unteren Bereich der haubenförmigen Wand 21 befinden sich weiters zwei Behälter 25 und 26 zur Aufnahme von abgelesenen und ausgewerteten Datenträgern 10. Im unteren Bereich befindet sich weiters eine Leiste 27, welche als Anschlag für die Wippe 22 dient.
Zur Fixierung der Wippe 22 in ihrer horizontalen Lage dient ein in den Fig. 3 und 4 dargestellter, mittels eines Elektromagneten 32 betätigbarer Riegelbolzen 33.

Die Wirkungsweise dieser Vorrichtung ist wie folgt:
Sobald ein Datenträger 10 abgelesen und ausgewertet werden soll, wird dieser durch die Ausnehmung 13 hindurch auf die Wippe 22, welche sich in der horizontalen Lage befindet, aufgelegt. Hierauf wird die verdrehbare Abdeckung 14 um etwa 180° verdreht, wodurch der Innenraum des Gehäuses 1 verschlossen wird. Sobald das Gehäuse 1 geschlossen ist, erfolgt durch die Sensoren 31 die Ablesung der Daten des Datenträgers 10. Da sich jeweils einige Sensoren 31 von den betreffenden Datenträgern 10 in einem Abstand befinden, welcher geringer ist als der Radius des halbkreisförmigen Bereiches 21a der Abdeckung 21, wird eine ordnungsgemäße Ablesung der Datenträger 10 gewährleistet.

Sobald dieser Vorgang abgeschlossen wurde, wird der Verriegelungsbolzen 33 aus der ihm in der Wippe 22 zugeordneten Bohrung herausgezogen und wird der Stellmotor 23 in Betrieb gesetzt, wodurch die Wippe 22 verdreht wird. Hierdurch gleitet der betreffende Datenträger 10 in einen der unterhalb der Wippe befindlichen Sammelbehälter 25 und 26 ab.

Da die Wippe 22 sowohl in als auch entgegen der Richtung des Uhrzeigersinnes verdreht werden kann, können die Datenträger 10 in zwei unterschiedliche Gruppen unterteilt werden, wodurch der nachfolgende Vorgang des Sortierens der Datenträger 10 vereinfacht wird. Hierauf wird auch die verdrehbare Klappe·14 vom Riegelbolzen 36 freigegeben, wodurch sie unter Wirkung der Rückstellfeder 17 in ihre Offenlage zurückverdreht wird.

Nach der Auswertung der Datenträger 10 wird angezeigt, welcher Betrag durch den Benützer der Anlage geleistet werden muß. Nachdem die entsprechende Zahlung geleistet wurde, wird der Ausgang der Anlage entriegelt, wodurch diese vom Benützer verlassen werden kann.

Durch diese Einrichtung ist somit ein Gerät geschaffen, welches aufgrund seines einfachen Aufbaues sowohl in elektronischer als auch in mechanischer Hinsicht sehr wenig störungsanfällig ist, wodurch es den Erfordernissen bei der automatisierten Abrechnung von in Anspruch genommenen Leistungen optimal entspricht.

## Patentansprüche

1. Einrichtung zur Auswertung von auf elektronischen Datenträgern, insbesondere Wertkarten, gespeicherten Daten mit einem Gehäuse, in welches die Datenträger einbringbar sind und welches mit Lese- und Auswert-bzw. Anzeigegeräten ausgebildet ist, dadurch gekennzeichnet, daß das Gehäuse (1) mit einer Öffnung (13) ausgebildet ist, welche Öffnung durch eine bewegliche Abdeckung (14) verschließbar ist, und in dessen Innenraum sich elektronische Auswertegeräte (31) sowie eine verdrehbare Wippe (22) befinden, wobei nach der Auswertung des jeweiligen elektronischen Datenträgers (10) die Wippe (22) verschwenkt wird, wodurch dieser Datenträger (10) an einen Sammelbehälter (25, 26) od.dgl. abgebbar ist.

2. Einrichtung nach Patentanspruch 1, dadurch gekennzeichnet, daß die bewegliche Abdeckung durch einen an der Vorderseite des Gehäuses (1) vorgesehenen Drehschieber (14) gebildet ist, welcher in seine Schließstellung verdrehbar ist.

3. Einrichtung nach Patentanspruch 2, dadurch gekennzeichnet, daß der Drehschieber (14) angenähert halbkreisförmig ausgebildet ist.

4. Einrichtung nach einem der Patentansprüche 2 und 3, dadurch gekennzeichnet, daß der Drehschieber (14) entgegen der Wirkung einer Rückstellfeder (17) in seine Schließstellung verdrehbar ist.

5. Einrichtung nach Patentanspruch 4, dadurch gekennzeichnet, daß der Drehschieber (14) in der Schließstellung mittels eines durch einen Elektromagneten (32) verstellbarem Bolzens (33) verriegelbar ist.

6. Einrichtung nach einem der Patentansprüche 1 bis 5, dadurch gekennzeichnet, daß der Innenraum des Gehäuses (1) an seiner Oberseite durch eine halbzylindrische Wand (21a) abgeschlossen ist, an welcher sich die elektronischen Auswertegeräte (31) befinden.

7. Einrichtung nach einem der Patentansprüche 1 bis 6, dadurch gekennzeichnet, daß die Wippe (22) um eine Achse (20) verschwenkbar ist, welche sich koaxial zur halbzylindrischen Wand (21a) befindet und welche vorzugsweise auch die Drehachse der verschwenkbaren Abdeckung (14) bildet.

8. Einrichtung nach einem der Patentansprüche 1 bis 7, dadurch gekennzeichnet, daß ein Elektromotor (23) vorgesehen ist, welcher zur Verdrehung der Wippe (22) dient.

9. Einrichtung nach einem der Patentansprüche 1 bis 8, dadurch gekennzeichnet, daß die Wippe (22) sowohl im Uhrzeigersinn als auch entgegen dem Uhrzeigersinn verdrehbar ist.

10. Einrichtung nach einem der Patentansprüche 1 bis 9, dadurch gekennzeichnet, daß im unteren Bereich des Gehäuses (1) zwei Behälter (25, 26) zur Aufnahme der Datenträger (10) vorgesehen sind.

11. Einrichtung nach einem der Patentansprüche 1 bis 10, dadurch gekennzeichnet, daß die Wippe (22) in ihrer waagrechten Stellung, vorzugsweise mittels eines elektromagnetisch betätigbaren Bolzens (33), feststellbar ist.
